# EUROPEAN PATENT SPECIFICATION

(11) **EP 0 255 374 B1**
(45) Date of publication and mention of the grant of the patent: **24.02.1993**
(21) Application number: 87306728.4
(22) Date of filing: 29.07.1987
(51) Int. Cl.: H04M 19/02

(54) **Telephone circuit for supplying ringing signals to a subscriber telephone line and for detecting the unhooked condition during ringing**
Fernsprechschaltung zum Zuführen von Wecksignalen an eine Fernsprechteilnehmerleitung und für die Erkennung des Abhebens während des Weckens
Circuit téléphonique pour l'application de signaux de sonnerie à une ligne d'abonné téléphonique et pour la détection du décrochage pendant la sonnerie

(30) Priority: 29.07.1986 IT 2128486
(43) Date of publication of application: 03.02.1988
(73) Proprietor: SGS Microelettronica SpA, 20041 Agrate Brianza (MI) (IT)
(72) Inventor: Pasetti, Mauro, I-20151 Milan (IT); Siligoni, Marco, I-20010 Vittuone Milan (IT)
(74) Representative: Robinson, John Stuart

(56) References cited:
- EP-A- 0 165 516
- DE-A- 3 231 573

## Description

The present invention relates to telephone circuits for detecting the unhooked condition during ringing and for supplying ringing signals to the line, for instance arranged to be monolithically integrated and to form an interface between a subscriber telephone line and a subscriber line circuit under the control of exchange control components.

A subscriber telephone set is generally connected to a telephone exchange by a line whose terminals are connected, in parallel, to both a speech circuit and a ringer. The speech circuit is in series with a switch which is closed when the set is unhooked; the ringer is in series with a capacitor to decouple it from direct current in the line.

A telephone line is supplied by a direct voltage generator, in series with which there is connected an alternating voltage generator which forms the source of ringing signals when the exchange control components generate a control signal for the supply of these signals to the subscriber. The ringing signals have a wave shape of sinusoidal type and are supplied to the subscriber at a predetermined ringing rhythm by the exchange control components. Upon command by these components, the line is supplied with a succession of these signals which are spaced from one another by pauses between signals. When the ringing signals are supplied to the subscriber, there is therefore present in the line an alternating ringing current on which a direct current component is superimposed only when the set has been unhooked.

When no ringing signal is supplied to the subscriber, or during the pauses between the signals, only a direct current component is present in the line when the set has been unhooked.

The detection of the unhooked condition is obtained in modern telephone exchanges by circuit means of electronic type arranged to recognize the variations in the line current and to detect the possible presence of a direct current in the line due to unhooking of the set.

Passage from a calling signal supply stage to a pause stage where no signals are supplied, or vice versa, may cause instantaneous voltage and current variations on the line which make it difficult to detect unhooking of the set. These variations may also cause harmonics which may disturb the users of neighbouring lines. The causes of these voltage and current transients may be due to both the difference which normally exists between the value of the direct component supplied to the telephone line during the supply of a ringing signal and the component supplied during the pause between signals, either during the supply of or on the discontinuation of a sinusoidal ringing signal to the line at a moment when its voltage amplitude is not zero.

The sinusoidal ringing signals generally have a frequency of between 16 and 66Hz, with actual voltage values (60, 80 V) which are fairly high with respect to those of normal telephone speech signals: if they are not immediately discontinued when the set is unhooked, they are converted by the subscriber speech circuit into high intensity acoustic signals which may damage the subscriber's hearing as well as the set itself.

To avoid this drawback, the circuit means arranged to detect variations in the line current during unhooking should be able to supply a very rapid response, making it possible immediately to interrupt the supply of ringing signals to the line when unhooking takes place. In certain circumstances, the circuit means arranged to recognize variations in the line current could, however, interpret a variation in the line current due to other factors, for example disturbances caused by other subscribers, as a direct current variation on the line following unhooking.

To ensure that unhooking of the set has actually taken place, following the discontinuation of the supply of ringing signals, the possible presence of a direct component on the line may, for example, be checked for a second time, which would confirm that the subscriber has actually unhooked the set, as disclosed in the Italian Patent Application No. 67252-A/80. However, such a telephone ringing system may not be monolithically integrated.

According to one aspect of the invention, there is provided a telephone circuit as defined in the appended Claim 1. Preferred embodiments of the invention are defined in the appended claims.

It is thus possible to provide a telephone circuit, which may be monolithically integrated, for supplying ringing signals and for detecting the unhooked condition during ringing, arranged to form an interface between the subscriber telephone line and the subscriber line circuit under the control of exchange control components, which keeps the features of accuracy and rapidity of operation of known circuits unchanged and drastically reduces the generation of disturbances on the line with respect to such known circuits.

The invention will be further described, by way of example, with reference to the accompanying drawings, in which :
Figure 1 is a block diagram of a telephone circuit constituting a preferred embodiment of the invention, which is capable of being monolithically integrated, for the supply of ringing signals and the detection of the unhooked condition during ringing;
Figure 2 is a circuit diagram of an enabling circuit means of the telephone circuit of Figure 1; and
Figure 3 is a circuit diagram of a circuit means controlling the detection of the unhooked condition of the telephone circuit of Figure 1.

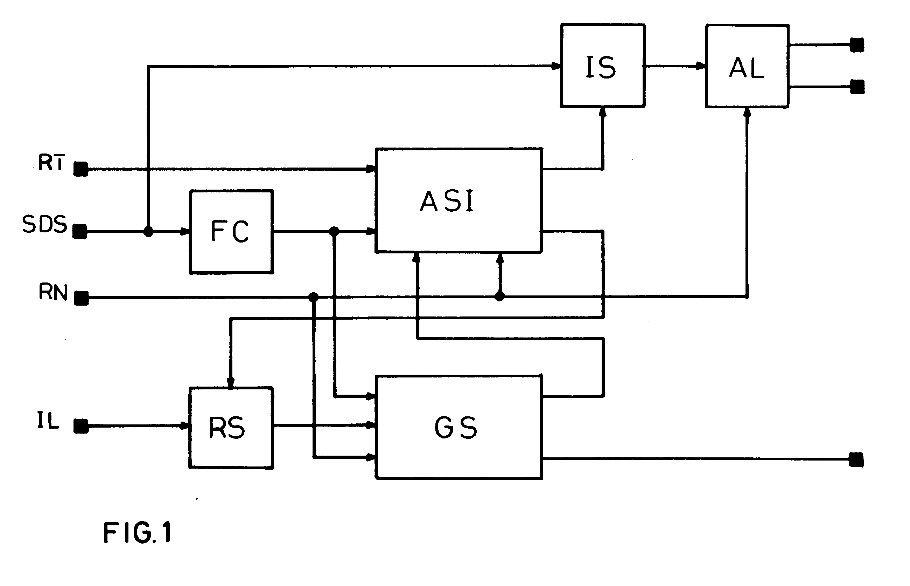

The telephone circuit shown in Figure 1 comprises a timing signal generating circuit means FC having an output terminal and an input terminal SDS for connection to exchange components arranged to generate a signal with a wave shape which is substantially of sinusoidal type having a frequency identical to the frequency of the sinusoidal ringing signals to be supplied to the line but whose amplitude is lower than the amplitude thereof.

An enabling circuit means ASI has a first input terminal connected to the output terminal of the circuit means FC, a second input terminal RN for connection to the exchange control components arranged to generate control signals for the supply of ringing signals, and a third input terminal for connection to exchange control components designed to generate control signals which determine the ringing rhythm. The enabling circuit means ASI also has first and second output terminals and an inhibiting terminal.

A circuit means IS for supplying ringing signals has an input terminal coupled to the exchange components which generate the continuous signal of sinusoidal type, an enabling terminal which is connected to the first output terminal of the enabling circuit means ASI, and an output terminal.

A circuit RS for detecting the direct current present on the line has a first input terminal which is supplied with the line current or an "image" current of the line current, an enabling terminal connected to the second output terminal of the enabling circuit means ASI, and an output terminal.

A circuit means GS for controlling the detection of the unhooked condition has a first input terminal connected to the output terminal of the circuit means FC, a second input terminal for connection to the exchange control components which generate the control signal for the supply of ringing signals, a third input terminal connected to the output terminal of the circuit RS, a first output terminal connected to the inhibiting terminal of the enabling circuit means ASI, and a second output terminal for connection to the exchange control components.

A circuit means AL for supplying the telephone line has a first input terminal connected to the output terminal of the circuit means IS, an enabling terminal for connection to the exchange control components which generate control signals for the supply of the ringing signals, and first and second output terminals for connection to the two wires of a subscriber telephone line.

With the exception of the first and second output terminals of the circuit means AL, all the terminals of the various blocks of Figure 1 should be considered as usable for the transmission of both current and voltage signals.

The circuit means FC for generating a timing signal may comprise a "zero crossing detector" of a type known to persons skilled in the art. The input terminal is supplied from a generator forming part of the exchange with a signal having a wave shape of sinusoidal type with a limited amplitude (1V_{RMS}) and a frequency equal to the frequency of the ringing signals to be supplied to the line. The circuit means FC generates at its output a pulse each time the input signal crosses zero in a predetermined direction. These signals are used as timing or clock signals for the operation of the circuit.

The enabling circuit means ASI generates at the first output terminal an enabling signal for the call signal supply circuit means IS when control signals from the exchange components are simultaneously supplied to the second and third input terminals. The enabling signal commences upon receipt of the first timing signal following the receipt of a control signal at the third input terminal, and continues until receipt of the first timing signal following the end of the control signal. The generation of the enabling signal may, however, be cancelled by an inhibiting signal supplied to the inhibiting terminal of the enabling circuit means ASI and generated by the circuit means GS controlling the detection of unhooking of the set.

To synchronize the timing signals and the sinusoidal input signal, the ringing signal supplying circuit means IS is always enabled or disabled only when the sinusoidal signal, from which the ringing signals originate, crosses zero.

The circuit enabling means ASI also generates, at the second output terminal, a signal which enables operation of the circuit RS for detecting direct current on the line.

The detection of direct current in the line is, however, enabled only after a predetermined time interval, equal to a whole number of periods of the sinusoidal signal generated by the exchange control components, from the moment at which a signal to supply or a signal to discontinue the supply of ringing signals to the line is generated.

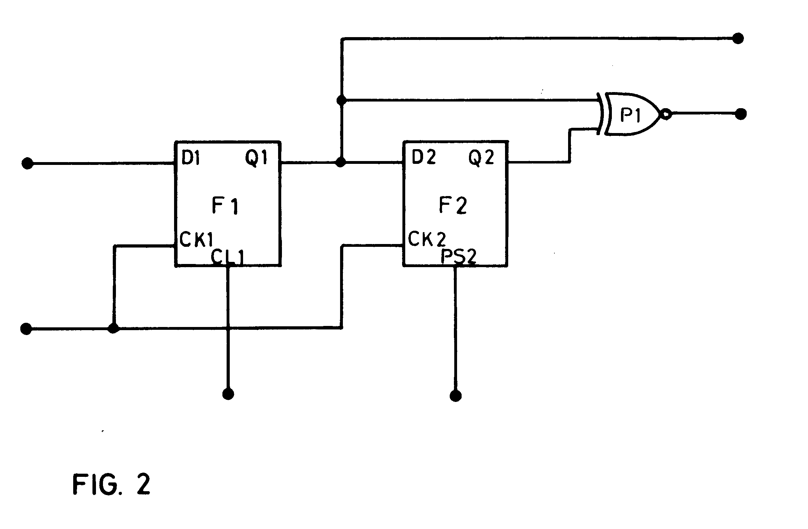

As shown in Figure 2, the enabling circuit means ASI comprises a D type bistable multivibrator or flip flop F1, having a data input terminal D1, a clock input terminal CK1, a clear terminal CL1, and an output terminal Q1, a D type bistable multivibrator or flip flop F2, having a data input terminal D2, a clock input terminal cK2, a presetting terminal PS2, and an output terminal Q2, and an "exclusive NOR" gate P1 having first and second input terminals and an output terminal.

The clock input terminals of the two multivibrators F1 and F2 are connected together to form the first input terminal of the enabling circuit means. The data input terminal D1 of the multivibrator F1 forms the third input terminal of the enabling circuit means. The clear terminal CL1 of the multivibrator F1 forms the inhibiting terminal of the enabling circuit means. The presetting terminal PS2 of the multivibrator F2 forms the second input terminal of the enabling circuit means. The output terminal Q1 of the multivibrator F1 and the data input terminal D2 of the multivibrator F2 are connected to the first input terminal of the gate P1 to form the first output terminal of the enabling circuit means. The output terminal Q2 of the multivibrator F2 is connected to the second input terminal of the gate P1. The output terminal of the gate P1 forms the second output terminal of the enabling circuit means.

The ringing signal supplying circuit means IS may be formed by a circuit known in the art as an "electronic switch". The circuit means IS is enabled by the signal generated at the first output terminal of the enabling circuit means ASI to begin to supply the line with the sinusoidal signal generated by the exchange components via the circuit means AL which amplifies this signal, only when the signal crosses zero. It is thus possible to satisfy the condition that there are never instantaneous voltage variations on the line due to the supply of ringing signals, or the discontinuation of these signals, at moments at which the instantaneous amplitude of the signals originating from the sinusoidal signal is not zero.

The telephone line supplying circuit means AL comprises both circuits arranged to amplify the ringing signals from the circuit means IS and circuits arranged to supply the telephone line connected thereto. The circuit means AL supplies the telephone line with a predetermined constant direct voltage when the exchange control components supply, via the terminal RN, the control signal on which the ringing signals from the circuit means IS are superimposed.

The circuit means RS for detecting direct current in the line may in contrast be formed by a circuit comprising a line current transducer and an integrator which integrates the current supplied by the transducer over one or more whole periods of the line voltage using arrangements which are known. Such a circuit is disclosed, for example, in the Italian patent application number 23832 A/83 in the name of the present applicants. When the integrator detects the presence of direct current in the line at a level higher than a predetermined threshold, the circuit generates a signal indicating the presence of direct current in the line, which condition may be caused by a possible unhooking of the set. The information that direct current is present in the line is, however, further processed by the circuit means GS for controlling the detection of the unhooked condition to prevent erroneous signalling when unhooking has not taken place.

On receipt of the first timing signal following the information that direct current is present in the line, the circuit means GS for controlling the detection of the unhooked condition generates at its first output terminal a signal which inhibits the ringing signal supplying circuit means IS and the circuit means RS for detecting direct current in the line to be disabled. As described above, enabling of the circuit means RS for detecting direct current in the line RS by means of the signal generated at the second output terminal of the enabling circuit means ASI is reset after a time interval equal to a predetermined number of periods of the sinusoidal signal from which the ringing signals originate.

It is thus possible to check, after a predetermined time interval, whether a direct component is still present in the line. If this is the case, the signal generated by the circuit means RS again causes the inhibition of the enabling circuit means ASI, and therefore also of the circuit means IS and AL, and a signal indicating that unhooking has taken place is generated at the second output terminal of the circuit means GS for controlling the detection of the unhooked condition and continues to be generated as long as direct current is present in the line and the exchange control components confirm the ringing condition.

As soon as the absence of a direct current component in the line is detected, the inhibition of the enabling circuit block ASI is immediately removed and the signal indicating that unhooking has taken place is no longer generated. The enabling circuit means ASI therefore enables the circuit means IS to supply ringing signals to the line and the circuit means RS for the detection of direct current in the line is also enabled after a period of time equal to a predetermined number of periods of the sinusoidal ringing signal.

The above description relates to the operation of a telephone circuit in the case in which the presence of a direct current component in the line is detected during the supply of a ringing signal. In the case, however, in which the presence of a direct current component in the line is detected when no ringing signal is being supplied to the line (which condition may occur, for example, when the exchange components have ceased to generate signals for the ringing rhythm supplied to the third input terminal of the enabling circuit means ASI), the circuit means GS for controlling the detection of the unhooked condition also generates at the first output terminal an inhibiting signal which inhibits the circuit means ASI and therefore disables the supply of ringing signals to the line by the circuit means IS.

The detection circuit means RS also remains disabled for a predetermined period of time equal to a certain number of periods of the sinusoidal ringing signal, from the moment at which the inhibiting signal is generated for the enabling circuit ASI, following which it is again checked, on the following timing signal, whether the previously detected direct current component is still present in the line. If this is the case, the circuit means GS again generates an inhibiting signal for the enabling circuit means ASI and generates at the second output terminal a signal indicating that unhooking has taken place for the exchange components.

When the absence of a direct current component in the line is detected, the operation of the enabling circuit means ASI is no longer inhibited and the signal indicating that unhooking has taken place is no longer generated.

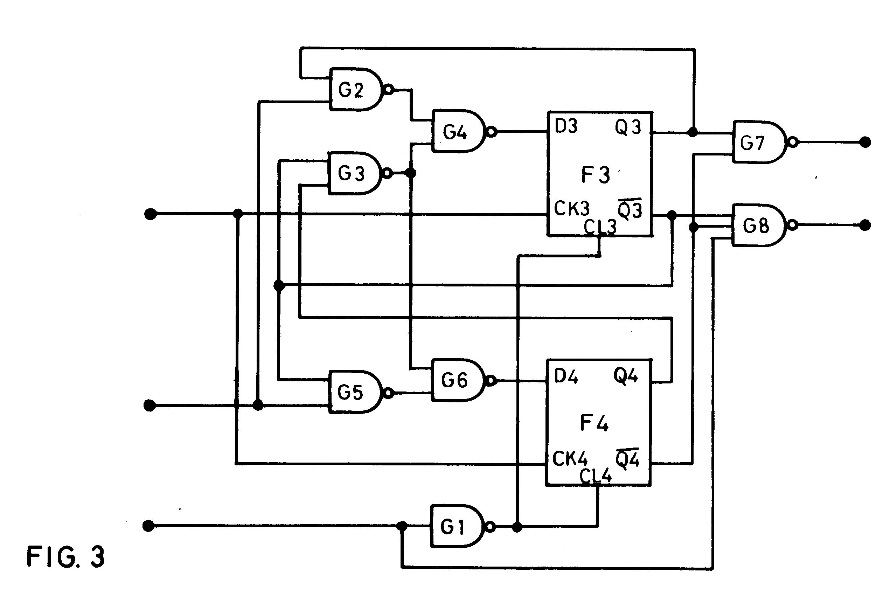

The circuit means GS controlling the detection of the unhooked condition may be formed by a logic circuit of the type shown in Figure 3 and comprising an inverter G1 having an input terminal and an output terminal, six NAND gates G2, G3, G4, G5, G6, G7 each having first and second input terminals and an output terminal, and a NAND gate G8 having first, second and third input terminals and an output terminal.

The circuit means GS also comprises two D type bistable multivibrators or D-type flip-flops F3 and F4, each having a data input terminal D3, D4, a clock input terminal CK3, CK4, a clear terminal CL3, CL4, and two output terminals Q3, Q̅3 and Q4, Q̅4, respectively. The clock input terminals of the two multibrators F3 and F4 are connected together to form the first input terminal of the circuit means GS for controlling the detection of the unhooked condition.

The input terminal of the gate G1 and the first input terminal of the gate G8 are connected together to form the second input terminal of the circuit means GS. The first input terminal of the gates G2 and G5 are connected together to form the third input terminal of the circuit means GS. The output terminal of the gate G7 forms the first output terminal of the circuit means GS. The output terminal of the gate G8 forms the second output terminal of the circuit means GS.

The clear terminals CL3 and CL4 of the two multivibrators F3 and F4 are both connected to the output terminal of the gate G1. The second input terminal of the gate G2 is connected to the first input terminal of the gate G7 and to the first output terminal Q3 of the multivibrator F3. The output terminal of the gate G2 is connected to the first input terminal of the gate G4. The output terminal of the gate G3 is connected to the second input terminal of the gate G4 and to the first input terminal of the gate G6. The output terminal of the gate G4 is connected to the data input terminal D3 of the multivibrator F3. The first input terminal of the gate G3 is connected to the first output terminal Q4 of the multivibrator F4. The second input terminal of the gate G3, the second input terminal of the gate G5, and the second input terminal of the gate G8 are connected to the second output terminal Q̅3 of the multivibrator F3. The output terminal of the gate G5 is connected to the second input terminal of the gate G6. The output terminal of the gate G6 is connected to the data input terminal D4 of the multivibrator F4. The second output terminal Q̅4 of the multivibrator F4 is connected to the second input terminal of the gate G7 and to the third input terminal of the gate G8.

The telephone circuit thus enables the supply of a ringing signal to the line or the discontinuation thereof when the instantaneous amplitude of the ringing signal is zero, thereby eliminating instantaneous voltage and current variations on the line which might make it difficult to detect unhooking in very short periods and which could generate harmonics such as to disturb the users of neighbouring lines. It also enables the value of the direct voltage component supplied to the telephone line to be kept constant both during the supply of a ringing signal and during a pause between ringing signals.

During the supply of the ringing signal, the detection of the presence of direct current in the line causes the cessation of the supply at the first moment at which the instantaneous amplitude of the signal is zero, thereby satisfying the requirement of rapid interruption of the supply of the ringing signal as soon as the presence of direct current in the line is detected so as not to damage the subscriber's hearing or telephone set.

In order to be able to detect only actual unhooking of the set, the presence of a direct component in the line is checked a second time, after a predetermined interval when no signals are being supplied to the line, to supply the exchange components reliably with correct information that the set has been unhooked.

## Claims

1. A telephone circuit for supplying ringing signals and for detecting an unhooked condition during ringing, arranged to form an interface between a subscriber telephone line and a subscriber line circuit under the control of a telephone exchange, characterised in that it comprises circuit means (FC) for generating timing signals and circuit means (AL) for supplying the telephone lines, each having at least a first input terminal for receiving from the telephone exchange an alternating signal of sinusoidal type having a frequency equal to the frequency of a ringing signal to be supplied to the line, the circuit means (FC) for generating timing signals being arranged to generate a timing signal at zero crossing of the alternating signal, the circuit means (AL) for supplying the telephone line being arranged to receive the alternating signals via circuit means (IS) for supplying ringing signals having an enabling terminal, the circuit means (AL) for supplying the telephone line having an enabling terminal and first and second output terminals for connection to the subscriber telephone line, there being provided enabling circuit means (ASI) and circuit means (GS) for controlling the detection of the unhooked condition, each having at least first and second input terminals for connection to the circuit means (FC) for generating the timing signals and to receive from the telephone exchange ringing control signals for the supply to the line of ringing signals, respectively, the enabling terminal of the circuit means (AL) for supplying the telephone line being arranged to receive the ringing control signals, the circuit means (GS) for controlling the detection of the unhooked condition having at least a third input terminal for connection to the line via circuit means (RS) for detecting direct current in the line and for generating a signal when the direct current in the line is greater than a predetermined current threshold, and having an enabling terminal and at least first and second output terminals, the second output terminal being arranged to supply to the telephone exchange signals indicating that unhooking has taken place, the enabling circuit means (ASI) having at least a third input terminal for receiving, from the telephone exchange control signals for causing a predetermined ringing rhythm, an inhibiting terminal connected to the first output terminal of the circuit means (GS) for controlling the detection of the unhooked condition, and first and second output terminals connected to the enabling terminal of the circuit means (IS) for supplying ringing signals and to the enabling terminal of the circuit means (RS) for detecting direct current in the line, respectively.

2. A telephone circuit as claimed in Claim 1, characterised in that the enabling circuit means (ASI) is arranged to supply, via the first output terminal, an enabling signal to the circuit means (IS) for supplying ringing signals when the second input terminal thereof receives a signal from the telephone exchange and when no signal is supplied to the inhibiting terminal for a time interval between the first timing signal supplied to the first input terminal following the supply of a signal to the third input terminal and the first timing signal supplied to the first input terminal following the cessation of the signal supplied to the third input terminal, and is arranged to supply, via the second output terminal, an enabling signal to the circuit means (RS) for detecting direct current in the line for the whole of the time in which a signal is supplied to the second input terminal, with the exception of the time intervals between each timing signal during which the generation of the enabling signal which is supplied via the first output terminal is initiated and a subsequent predetermined timing signal, and between each timing signal during which the generation of the enabling signal is terminated and a subsequent predetermined timing signal.

3. A telephone circuit as claimed in Claim 1 or 2, characterised in that the circuit means (GS) for controlling the detection of the unhooked condition is arranged to supply an inhibiting signal, via the first output terminal, to the enabling circuit means (ASI) when a signal is supplied to the second input terminal but only in a time interval between the first timing signal supplied to the first input terminal following the supply of a signal generated by the circuit means (RS) for detecting direct current in the line to the third input terminal and the first timing signal following the cessation of the signal supplied to the third input terminal, after a predetermined number of timing signals from the supply of this signal to the third input terminal and to supply a signal indicating that unhooking has taken place via the second output terminal only when, during the first timing signal after this predetermined number of timing signals, there is still the simultaneous supply of a signal to the second input terminal and to the third input terminal, the information signal being generated for the entire time interval between the first timing signal following the predetermined number of timing signals and the first timing signal following the cessation of the signal supplied to the third input terminal.

4. A telephone circuit as claimed in any one of the preceding claims, characterised in that the circuit means (AL) for supplying the telephone line comprises circuit means for supplying the subscriber telephone line coupled to the two output terminals and for transmitting via the line, when a signal is received at the input terminal thereof from the telephone exchange, a signal having a sinusoidal wave shape with a frequency equal to that of the signal supplied to the input terminal thereof.

5. A telephone circuit as claimed in any of the preceding claims, characterised in that the enabling circuit means (ASI) comprises: a first D type bistable multivibrator (F1) having a data input terminal (D1) which forms the third input terminal of the enabling circuit means (ASI), a clock input terminal (CK1), a clear terminal (CL1) which forms the inhibiting terminal of the enabling circuit means (ASI), and an output terminal (Q1); a second D type multivibrator (F2) having a data input terminal (D2); a clock input terminal (CK2), a presetting terminal (PS2) which forms the second input terminal of the enabling circuit means (ASI), and an output terminal (Q2); and an exclusive NOR gate (P1) having first and second input terminals and an output terminal which forms the second output terminal of the enabling circuit means (ASI), the clock input terminals of the first and second multivibrators (F1, F2) being connected together to form the first input terminal of the enabling circuit means (ASI), the first input terminal of the gate (P1) being connected to the output terminal (Q1) of the first multivibrator (F1) and to the data input terminal (D2) of the second multivibrator (F2) to form the first output terminal of the enabling circuit means (ASI), the second input terminal of the gate (P1) being connected to the output terminal (Q2) of the second multivibrator (F2).

6. A telephone circuit as claimed in any one of the preceding claims, characterised in that the circuit means (GS) for controlling the detection of the unhooked condition comprises an inverter (G1) having an input terminal and an output terminal, second, third, fourth, fifth, sixth and seventh NAND gates (G2-G7) each having first and second input terminals and an output terminal, an eighth NAND gate (G8) having first, second and third input terminals and an output terminal, third and fourth D type bistable multivibrators (F3, F4) each having a data input terminal (D3, D4), a clock input terminal (CK3, CK4), a clear terminal (CL3, CL4), and two output terminals (Q3, Q̅3, Q4, Q̅4), the clock input terminals (CK3, CK4) of the third and fourth multivibrators (F3, F4) being connected together to form the first input terminal of the circuit means (GS) controlling the detection of the unhooked condition, the input terminal of the inverter (G1) and the first input terminal of the eighth gate (G8) being connected together to form the second input terminal of the circuit means (GS), the first input terminal of the second gate (G2) and the first input terminal of the fifth gate (G5) being connected together to form the third input terminal of the circuit means (GS), the output terminal of the seventh gate (G7) forming the first output terminal of the circuit means (GS) for controlling the detection of the unhooked condition, the output terminal of the eighth gate (G8) forming the second output terminal of the circuit means (GS), the clear terminals (CL3, CL4) of the third and fourth multivibrators (F3, F4) being connected to the output terminal of the inverter (G1), the second input terminal of the second gate (G2) being connected to the first input terminal of the seventh gate (G7) and to the first output terminal (Q3) of the third multivibrator (F3), the output terminal of the second gate (G2) being connected to the first input terminal of the fourth gate (G4), the output terminal of the third gate (G3) being connected to the second input terminal of the fourth gate (G4) and to the first input terminal of the sixth gate (G6), the output terminal of the fourth gate (G4) being connected to the data input terminal (D3) of the third multivibrator (F3), the first input terminal of the third gate (G3) being connected to the first output terminal (Q4) of the fourth multivibrator (F4), the second input terminal of the third gate (G3), the second input terminal of the fifth gate (G5) and the second input terminal of the eighth gate (G8) being connected to the second output terminal (Q̅3) of the third multivibrator (F3), the output terminal of the fifth gate (G5) being connected to the second input terminal of the sixth gate (G6), the output terminal of the sixth gate (G6) being connected to the data input terminal (D4) of the fourth multivibrator (F4), the second output terminal (Q̅4) of the fourth multivibrator (F4) being connected to the second input terminal of the seventh gate (G7) and to the third input terminal of the eighth gate (G8).

## Patentansprüche

1. Telefonschaltung zur Lieferung von Rufsignalen und zur Erfassung der Hörerabhebung während des Läutens, wobei die Schaltung so ausgelegt ist, daß eine Schnittstelle zwischen einer Teilnehmertelefonleitung und einer Teilnehmerleitungsschaltung unter der Kontrolle der Fernsprechvermittlung gebildet wird,
dadurch **gekennzeichnet,** daß die Telefonschaltung eine Schaltungseinrichtung (FC) zur Erzeugung von Zeitgabesignalen, und eine Schaltungseinrichtung (AL) zum Einspeisen der Telefonleitung aufweist, wobei jede Schaltung mindestens eine erste Eingangsklemme zum Empfangen eines von der Fernsprechzentrale gelieferten sinusförmigen Wechselstromsignals mit einer Frequenz entsprechend der Frequenz des an die Leitung zu liefernden Rufsignals besitzt; wobei die Schaltungseinrichtung (FC) zur Erzeugung von Zeitgabesignalen so ausgelegt ist, daß beim Nulldurchgang des Wechselstromsignals ein Zeitgabesignal erzeugt wird; wobei die Schaltungseinrichtung (AL) zum Einspeisen der Telefonleitung so ausgelegt ist, daß die Wechselstromsignale über Schaltungseinrichtungen (IS) mit Freigabeklemme zur Lieferung der Rufsignale empfangen werden; wobei die Schaltungseinrichtung (AL) zum Einspeisen der Telefonleitung eine Freigabeklemme und erste und zweite Ausgangsklemmen für den Anschluß an die Teilnehmertelefonleitung besitzt; und daß Freigabeschaltungseinrichtungen (ASI) und Schaltungseinrichtungen (GS) zur Steuerung der Erfassung des Abhebungszustandes des Hörers vorgesehen sind, wobei jede dieser Einrichtungen mindestens eine erste und zweite Eingangsklemme für den Anschluß an die Schaltungseinrichtung (FC) zur Erzeugung der Zeitgabesignale und zum Empfangen von Rufsteuersignalen der Fernsprechzentrale zur Lieferung an die Rufsignalleitung besitzt; wobei die Freigabeklemme der Schaltungseinrichtung (AL) zur Einspeisung der Telefonleitung so ausgelegt ist, daß Rufsteueisignale empfangen werden; wobei die Schaltungseinrichtungen (GS) zur Überwachung der Erfassung des Abhebungszustandes des Hörers mindestens eine dritte Eingangsklemme für den Anschluß an die Leitung über Schaltungseinrichtungen (RS) aufweisen, die zur Erfassung von Gleichstrom in der Leitung und zur Erzeugung eines Signals dienen, wenn der Gleichstrom in der Leitung größer als ein vorbestimmter Stromschwellenwert ist, und die eine Freigabeklemme und mindestens erste und zweite Ausgangsklemmen besitzen, wobei die zweite Ausgangsklemme so angeordnet ist, daß Signale an die Fernsprechzentrale geliefert werden, die anzeigen, daß ein Abheben des Hörers stattgefunden hat; wobei die Freigabeschaltungseinrichtungen (ASI) mindestens eine dritte Eingangsklemme zum Empfangen von Steuersignalen der Fernsprechzentrale zur Auslösung eines vorbestimmten Läutetaktes; eine Sperrklemme, die an die erste Ausgangsklemme der Schaltungseinrichtungen zur Überwachung der Erfassung des Abhebungszustandes des Hörers; und erste und zweite Ausgangsklemmen besitzen, die jeweils an die Freigabeklemme der Schaltungseinrichtung (IS) zur Lieferung der Rufsignale und an die Freigabeklemme der Schaltungseinrichtung (RS) zur Erfassung von Gleichstrom in der Leitung angeschlossen sind.

2. Telefonschaltung nach Anspruch 1,
dadurch **gekennzeichnet,** daß die Freigabeschaltungseinrichtungen (ASI) so ausgelegt sind, daß über die erste Ausgangsklemme ein Freigabesignal an die Schaltungseinrichtung (IS) zur Lieferung von Rufsignalen geliefert wird, wenn die zweite Eingangsklemme derselben ein Signal von der Fernsprechzentrale empfängt und wenn kein Signal an die Sperrklemme während eines Zeitintervalls geliefert wird, das zwischen dem ersten, an die erste Eingangsklemme nach dem Anlegen eines Signals an die dritte Eingangsklemme gelieferten Taktsignal und dem ersten, an die erste Eingangsklemme nach dem Ende des an die dritte Eingangsklemme angelegten Signals gelieferten Taktsignal liegt; und daß die Freigabeschaltungseinrichtung so ausgelegt ist, daß über die zweite Ausgangsklemme ein Freigabesignal an die Schaltungseinrichtung (RS) zur Erfassung von Gleichstrom in der Leitung während der gesamten Zeit geliefert wird, in der ein Signal an die zweite Eingangsklemme geliefert wird, mit Ausnahme der Zeitintervalle zwischen jedem Taktsignal, während denen die Erzeugung des Freigabesignals ausgelöst wird, das über die erste Ausgangsklemme geliefert wird, und einem nachfolgenden vorbestimmten Taktsignal; sowie während jedem Zeitgabesignal, in dem die Erzeugung des Freigabesignals beendet wird, und einem nachfolgenden vorbestimmten Taktsignal.

3. Telefonschaltung nach Anspruch 1 oder 2, dadurch gekennzeichnet, daß die Schaltungseinrichtungen (GS) zur Steuerung der Erfassung des Abhebungszustandes des Hörers so ausgelegt sind, daß ein Sperrsignal über die erste Ausgangsklemme an die Freigabeschaltungseinrichtung (ASI) angelegt wird, wenn ein Signal an die zweite Eingangsklemme geliefert wird, jedoch nur in einem Zeitintervall, das zwischen dem ersten, an die erste Eingangsklemme gelieferten Taktsignal nach der Lieferung eines von der Schaltungseinrichtung (RS) zur Erfassung von Gleichstrom in der Leitung erzeugten Signals an die dritte Eingangsklemme, und dem ersten Zeitgabesignal liegt, das nach einer vorbestimmten Anzahl von Zeitgabesignalen seit der Lieferung dieses Signals an die dritte Eingangsklemme im Anschluß an die Beendigung des an die dritte Eingangsklemme gelieferten Signals folgt; und daß ein Signal, das anzeigt, daß das Abheben des Hörers stattgefunden hat, über die zweite Ausgangsklemme nur dann geliefert wird, wenn während des ersten Zeitgabesignals nach der genannten vorbestimmten Anzahl von Zeitgabesignalen immer noch die gleichzeitige Lieferung eines Signals an die zweite Eingangsklemme und an die dritte Eingangsklemme stattfindet, wobei das Informationssignal während des gesamten Zeitintervalls erzeut wird, das zwischen dem ersten, auf die vorbestimmte Anzahl von Zeitgabesignalen folgenden Signal, und dem ersten, auf die Beendigung des an die dritte Eingangsklemme gelieferten Signals folgenden Zeitgabesignal liegt.

4. Telefonschaltung nach einem beliebigen vorhergehenden Anspruch, dadurch gekennzeichnet, daß die Schaltungseinrichtung (AL) zum Einspeisen der Telefonleitung Schaltungseinrichtungen zum Einspeisen der an die beiden Ausgangsklemmen angeschlossenen Telefonleitung und zum Senden über diese Leitung aufweist, wenn an der Eingangsklemme dieser Einrichtung ein Signal der Fernsprechzentrale empfangen wird, das eine sinusförmige Wellenform mit einer Frequenz besitzt, die derjenigen des an die Eingangsklemme gelieferten Signals entspricht.

5. Telefonschaltung nach einem beliebigen vorhergehenden Anspruch, dadurch gekennzeichnet, daß die Freigabeschaltungseinrichtung (ASI) aufweist: einen ersten bistabilen Multivibrator (F1) vom Typ D, der folgende Klemmen umfaßt: eine Dateneingangsklemme (D1), die die dritte Eingangsklemme der Freigabeschaltungseinrichtung (ASI) bildet; eine Takteingangsklemme (CK1); eine Rücksetzklemme (CL1), die die Sperrklemme der Freigabeschaltungseinrichtung (ASI) bildet; und eine Ausgangsklemme (Q1); einen zweiten Multivibrator (F2) vom Typ D, der folgende Klemmen umfaßt: eine Dateneingangsklemme (D2); eine Takteingangsklemme (CK2); eine Voreinstellklemme (PS2), die die zweite Eingangsklemme der Freigabeschaltungseinrichtung (ASI) bildet; und eine Ausgangsklemme (Q2); und ein Exklusiv-NOR-Gate (P1), mit einer ersten und zweiten Eingangsklemme sowie einer Ausgangsklemme, die die zweite Ausgangsklemme der Freigabeschaltungseinrichtung (ASI) bildet; wobei die Takteingangsklemmen des ersten und des zweiten Multivibrators (F1, F2) miteinander verbunden sind und die erste Eingangsklemme der Freigabeschaltungseinrichtung (ASI) bilden; wobei die erste Eingangsklemme des Gates (P1) an die Ausgangsklemme (Q1) des ersten Multivibrators (F1) sowie an die Dateneingangsklemme (D2) des zweiten Multivibrators (F2) angeschlossen ist und die erste Ausgangsklemme der Freigabeschaltungseinrichtung (ASI) bildet, und wobei die zweite Eingangsklemme des Gates (P1) an die Ausgangsklemme (Q2) des zweiten Multivibrators (F2) angeschlossen ist.

6. Telefonschaltung nach einem beliebigen vorhergehenden Anspruch, dadurch gekennzeichnet, daß die Schaltungseinrichtung (GS) zur Steuerung der Erfassung des Abhebungszustandes des Hörers umfaßt: einen Inverter (G1) mit einer Eingangsklemme und einer Ausgangsklemme; einem zweiten, dritten, vierten, fünften, sechsten und siebten NAND-Gate (G2- G7), von denen jedes eine erste und eine zweite Eingangsklemme sowie eine Ausgangsklemme besitzt; einem achten NAND-Gate (G8), das eine erste, zweite und dritte Eingangsklemme und eine Ausgangsklemme besitzt; einem dritten und vierten bistabilen Multivibrator (F3, F4) vom Typ D, die jeweils eine Dateneingangsklemme (D3, D4), eine Takteingangsylemme (CK3, CK4), eine Rücksetzylemme (CL3, CL4), und zwei Ausgangsklemmen (Q3, Q3, Q4, Q4) besitzen; wobei die Takteingangsklemmen (CK3, CK4) des dritten und vierten Multivibrators (F3, F4) miteinander verbunden sind und die erste Eingangsklemme der Schaltungseinrichtung (GS) zur Steuerung der Erfassung des Abhebungszustandes des Hörers bilden; wobei die Eingangsklemme des Inverters (G1) und die erste Eingangsklemme des achten Gates (G8) miteinander verbunden sind und die zweite Eingangsklemme der Schaltungseinrichtung (GS) bilden; wobei die erste Eingangsklemme des zweiten Gates (G2) und die erste Eingangsklemme des fünften Gates (G5) miteinander verbunden sind und die dritte Eingangsklemme der Schaltungseinrichtung (GS) bilden; wobei: die Ausgangsklemme des siebten Gates (G7), die die erste Ausgansklemme der Schaltungseinrichtung (GS) zur Steuerung der Erfassung des Abhebungszustandes des Hörers bildet, die Ausgangsklemme des achten Gates (G8), die die zweite Ausgangsklemme der Schaltungseinrichtung (GS) bildet; die Rücksetzklemmen (CL3, CL4) des dritten und des vierten Multivibrators (F3, F4) miteinander verbunden sind und die Ausgangsklemme des Inverters (G1) bilden; wobei die zweite Eingangsklemme des zweiten Gates (G2) mit der ersten Eingangsklemme des siebten Gates (G7) verbunden ist und die erste Ausgangsklemme (Q3) des dritten Multivibrators (F3) bildet; wobei die Ausgangsklemme des zweiten Gates (G2) mit der ersten Eingangsklemme des vierten Gates (G4) verbunden ist; wobei die Ausgansklemme des dritten Gates (G3) mit der zweiten Eingangsklemme des vierten Gates (G4) und mit der ersten Eingangsklemme des sechsten Gates (G6) verbunden ist; wobei die Ausgangsklemme des vierten Gates (G4) mit der Dateneingangsklemme (D3) des dritten Multivibrators (F3) verbunden ist; wobei die erste Eingangsklemme des dritten Gates (G3) mit der ersten Ausgangsklemme (Q4) des vierten Multivibrators (F4) verbunden ist; wobei die zweite Eingangsklemme des dritten Gates (G3), die zweite Eingangsklemme des fünften Gates (G5) und die zweite Eingangsklemme des achten Gates (G8) an die zweite Ausgangsklemme (Q3) des dritten Multivibrators (F3) angeschlossen sind; wobei die Ausgangsklemme des fünften Gates (G5) an die zweite Eingangsklemme des sechsten Gates (G6) angeschlossen ist; wobei die Ausgangsklemme des sechsten Gates (G6) an die Dateneingangsklemme (D4) des vierten Multivibrators (F4) angeschlossen ist; und wobei die zweite Ausgangsklemme (Q4) des vierten Multivibrators (F4) an die zweite Eingangsklemme des siebten Gates (G7) und an die dritte Eingangsklemme des achten Gates (G8) angeschlossen ist.

## Revendications

1. Circuit téléphonique pour appliquer des signaux de sonnerie et pour détecter une condition de décrochage pendant la sonnerie, agencé pour former une interface entre une ligne téléphonique d'abonné et un circuit de ligne d'abonné sous le contrôle d'un central téléphonique, caractérisé en ce qu'il comprend un moyen de circuit (FC) pour générer des signaux de cadencement et un moyen de circuit (AL) pour alimenter les lignes téléphoniques, chacun comportant au moins une première borne d'entrée pour respectivement recevoir depuis le central téléphonique un signal alternatif du type sinusoïdal présentant une fréquence égale à la fréquence d'un signal de sonnerie qui doit être appliqué sur la ligne, le moyen de circuit (FC) pour générer des signaux de cadencement étant agencé pour générer un signal de cadencement lors d'un passage à zéro du signal alternatif, le moyen de circuit (AL) pour alimenter les lignes téléphoniques étant agencé pour recevoir les signaux alternatifs via un moyen de circuit (IS) pour appliquer des signaux de sonnerie comportant une borne de validation, le moyen de circuit (AL) pour alimenter les lignes téléphoniques comportant une borne de validation et des première et seconde bornes de sortie destinées à une connexion à la ligne téléphonique d'abonné, un moyen de circuit de validation (ASI) et un moyen de circuit (GS) pour contrôler la détection de la condition de décrochage étant prévus, chacun comportant au moins des première et seconde bornes d'entrée prévues pour la connexion au moyen de circuit (FC) pour générer les signaux de cadencement, et pour recevoir depuis le central téléphonique des signaux de commande de sonnerie pour l'alimentation sur la ligne de signaux de sonnerie, la borne de validation du moyen de circuit (AL) pour alimenter la ligne téléphonique étant agencée pour recevoir les signaux de commande de sonnerie, le moyen de circuit (GS) pour contrôler la détection d'une condition de décrochage comportant au moins une troisième borne d'entrée destinée à être connectée à la ligne via un moyen de circuit (RS) pour détecter un courant continu dans la ligne et pour générer un signal lorsque le courant continu dans la ligne est supérieur à un seuil de courant prédéterminé et comportant une borne de validation et au moins des première et seconde bornes de sortie, la seconde borne de sortie étant agencée pour appliquer au central téléphonique des signaux indiquant qu'un décrochage s'effectue, le moyen de circuit de validation (ASI) comportant au moins une troisième borne d'entrée pour recevoir, depuis le central téléphonique, des signaux de commande pour générer un rythme de sonnerie prédéterminé, une borne d'inhibition connectée à la première borne de sortie du moyen de circuit (GS) pour commander la détection de la condition de décrochage et des première et seconde bornes de sortie connectées respectivement à la borne de validation du moyen de circuit (IS) pour appliquer des signaux de sonnerie et à la borne de validation du moyen de circuit (RS) pour détecter un courant continu dans la ligne.

2. Circuit téléphonique selon la revendication 1, caractérisé en ce que le moyen de circuit de validation (ASI) est agencé pour appliquer, via la première borne de sortie, un signal de validation au moyen de circuit (IS) pour appliquer des signaux de sonnerie lorsque sa seconde borne d'entrée reçoit un signal en provenance du central téléphonique et lorsqu'aucun signal n'est appliqué à la borne d'inhibition pendant un intervalle temporel qui se situe entre le premier signal de cadencement appliqué à la première borne d'entrée qui suit l'alimentation d'un signal sur la troisième borne d'entrée et le premier signal de cadencement appliqué à la première borne d'entrée qui suit la cessation du signal appliqué à la troisième borne d'entrée, et est agencé pour appliquer, via la seconde borne de sortie, un signal de validation au moyen de circuit (RS) pour détecter un courant continu dans la ligne pendant la totalité de la durée pendant laquelle un signal est appliqué à la seconde borne d'entrée, à l'exception des intervalles temporels qui se situent entre chaque signal de cadencement pendant lequel la génération du signal de validation qui est appliqué via la première borne de sortie est initialisée et un signal de cadencement prédéterminé suivant, et entre chaque signal de candencement pendant lequel la génération du signal de validation est terminée et un signal de cadencement prédéterminé suivant.

3. Circuit téléphonique selon la revendication 1 ou 2, caractérisé en ce que le moyen de circuit (GS) pour commander la détection de la condition de décrochage est agencé pour appliquer un signal d'inhibition, via la première borne de sortie, au moyen de circuit de validation (ASI) lorsqu'un signal est appliqué à la seconde borne d'entrée mais seulement pendant un intervalle temporel qui se situe entre le premier signal de cadencement appliqué à la première borne d'entrée qui suit l'alimentation d'un signal généré par le moyen de circuit (RS) pour détecter un courant continu dans la ligne à la troisième borne d'entrée et le premier signal de cadencement qui suit la cessation du signal appliqué à la troisième borne d'entrée, après un certain nombre prédéterminé de signaux de cadencement depuis l'alimentation de ce signal sur la troisième borne d'entrée et pour alimenter un signal qui indique qu'un décrochage s'est effectué via la seconde borne de sortie seulement lorsque, pendant le premier signal de cadencement après ce nombre prédéterminé de signaux de cadencement, l'application simultanée d'un signal sur la seconde borne d'entrée et sur la troisième borne d'entrée s'effectue encore, le signal d'information étant généré pour l'intervalle temporel entier qui se situe entre le premier signal de cadencement qui suit le nombre prédéterminé de signaux de cadencement et le premier signal de cadencement qui suit la cessation du signal appliqué à la troisième borne d'entrée.

4. Circuit téléphonique selon l'une quelconque des revendications précédentes, caractérisé en ce que le moyen de circuit (AL) pour alimenter la ligne téléphonique comprend un moyen de circuit pour alimenter la ligne téléphonique d'abonné couplé aux deux bornes de sortie et pour transmettre via la ligne, lorsqu'un signal est reçu au niveau de sa borne d'entrée depuis le central téléphonique, un signal présentant une forme d'onde sinusoïdale avec une fréquence égale à celle du signal appliqué à sa borne d'entrée.

5. Circuit téléphonique selon l'une quelconque des revendications précédentes, caractérisé en ce que le moyen de circuit de validation (ASI) comprend : un premier multivibrateur bistable de type D (F1) comportant une borne d'entrée de données (D1) qui forme la troisième borne d'entrée du moyen de circuit de validation (ASI), une borne d'horloge (CK1), une borne de remise à zéro (CL1) qui forme la borne d'inhibition du moyen de circuit de validation (ASI) et une borne de sortie (Q1) ; un second multivibrateur de type D (F2) comportant une borne d'entrée de données (D2) ; une borne d'entrée d'horloge (CK2), une borne de pré-établissement (PS2) qui forme la seconde borne d'entrée du moyen de circuit de validation (ASI) et une borne de sortie (Q2) ; et une porte NON-OU exclusif (P1) comportant des première et seconde bornes d'entrée et une borne de sortie qui forme la seconde borne de sortie du moyen de circuit de validation (ASI), les bornes d'entrée d'horloge des premier et second multivibrateurs (F1, F2) étant connectées ensemble pour former la première borne d'entrée du moyen de circuit de validation (ASI), la première borne d'entrée de la porte (P1) étant connectée à la borne de sortie (Q1) du premier multivibrateur (F1) et à la borne d'entrée de données (D2) du second multivibrateur (F2) pour former la première borne de sortie du moyen de circuit de validation (ASI), la seconde borne d'entrée de la porte (P1) étant connectée à la borne de sortie (Q2) du second multivibrateur (F2).

6. Circuit téléphonique selon l'une quelconque des revendications précédentes, caractérisé en ce que le moyen de circuit (GS) pour commander la détection d'une condition de décrochage comprend un inverseur (G1) comportant une borne d'entrée et une borne de sortie, des seconde, troisième, quatrième, cinquième, sixième et septième portes NON-ET (G2-G7) dont chacune comporte des première et seconde bornes d'entrée et une borne de sortie, une huitième porte NON-ET (G8) comportant des première, seconde et troisième bornes d'entrée et une borne de sortie, des troisième et quatrième multivibrateurs bistables de type D (F3, F4) dont chacun comporte une borne d'entrée de données (D3, D4), une borne d'entrée d'horloge (CK3, CK4), une borne de remise à zéro (CL3, CL4) et deux bornes de sortie (Q3, Q̅3, Q4, Q̅4), les bornes d'entrée d'horloge (CK3, CK4) des troisième et quatrième multivibrateurs (F3, F4) étant connectées ensemble pour former la première borne d'entrée du moyen de circuit (GS) qui commande la détection de la condition de décrochage, la borne d'entrée de l'inverseur (G1) et la première borne d'entrée de la huitième porte (G8) étant connectées ensemble pour former la seconde borne d'entrée du moyen de circuit (GS), la première borne d'entrée de la seconde porte (G2) et la première borne d'entrée de la cinquième porte (G5) étant connectées ensemble pour former la troisième borne d'entrée du moyen de circuit (GS), la borne de sortie de la septième porte (G7) qui forme la première borne de sortie du moyen de sortie (GS) pour commander la détection de la condition de décrochage, la borne de sortie de la huitième porte (G8) qui forme la seconde borne de sortie du moyen de circuit (GS), les bornes de remise à zéro (CL3, CL4) des troisième et quatrième multivibrateurs (F3, F4) étant connectées à la borne de sortie de l'inverseur (G1), la seconde borne d'entrée de la seconde porte (G2) étant connectée à la première borne d'entrée de la septième porte (G7) et à la première borne de sortie (Q3) du troisième multivibrateur (F3), la borne de sortie de la seconde porte (G2) étant connectée à la première borne d'entrée de la quatrième porte (G4), la borne de sortie de la troisième porte (G3) étant connectée à la seconde borne d'entrée de la quatrième porte (G4) et à la première borne d'entrée de la sixième porte (G6), la borne de sortie de la quatrième porte (G4) étant connectée à la borne d'entrée de données (D3) du troisième multivibrateur (F3), la première borne d'entrée de la troisième porte (G3) étant connectée à la première borne de sortie (Q4) du quatrième multivibrateur (F4), la seconde borne d'entrée de la troisième porte (G3), la seconde borne d'entrée de la cinquième porte (G5) et la seconde borne d'entrée de la huitième porte (G8) étant connectées à la seconde borne de sortie (Q̅3) du troisième multivibrateur (F3), la borne de sortie de la cinquième porte (G5) étant connectée à la seconde borne d'entrée de la sixième porte (G6), la borne de sortie de la sixième porte (G6) étant connectée à la borne d'entrée de données (D4) du quatrième multivibrateur (F4), la seconde borne de sortie (Q̅4) du quatrième multivibrateur (F4) étant connectée à la seconde borne d'entrée de la septième porte (G7) et à la troisième borne d'entrée de la huitième porte (G8).
